# EUROPEAN PATENT SPECIFICATION

(11) **EP 4 482 741 B1**
(45) Date of publication and mention of the grant of the patent: **06.05.2026**
(21) Application number: 23722026.4
(22) Date of filing: 24.02.2023
(51) Int. Cl.: B64G 1/10, B64G 1/50, B64G 1/22

(54) **SPACE VEHICLE THERMAL MANAGEMENT SYSTEM AND METHOD FOR MANUFACTURE THEREOF**
WÄRMEVERWALTUNGSSYSTEM FÜR RAUMFAHRZEUG UND VERFAHREN ZUR HERSTELLUNG DAVON
SYSTÈME DE GESTION THERMIQUE DE VÉHICULE SPATIAL ET SON PROCÉDÉ DE FABRICATION

(30) Priority: 25.02.2022 FR 2201685
(43) Date of publication of application: 01.01.2025
(73) Proprietor: Network Access Associates Limited, London W12 7FQ (GB)
(72) Inventor: COLAS, Victor, London W12 7FQ (GB); NAGI, Manraj, London W12 7FQ (GB)
(74) Representative: Cabinet Camus Lebkiri
(86) International application number: PCT/IB2023/000100
(87) International publication number: WO 2023/161717

(56) References cited:
- CN-A- 105 523 198
- JP-A- 2008 194 876
- KR-A- 20110 014 856
- US-A- 5 314 146
- US-A1- 2012 125 571
- US-A1- 2016 305 714
- US-A1- 2022 041 304

## Description

### FIELD OF THE INVENTION

The field of the invention relates to space vehicles, and, more particularly, to space vehicle thermal management systems.

### BACKGROUND OF THE INVENTION

Conventionally built satellites utilize sandwich panels having aluminum honeycomb cores to construct load-bearing structures. Such panels take advantage of the high stiffness-to-density ratio of honeycomb structures. However, honeycomb panels, while lightweight, are typically expensive and difficult to manufacture, and may require specially-designed interface structures in order to fix payload elements thereto. Examples of such panels are disclosed in US 2022/041304 A1 or US 2016/305714 A1. US 2022/041304 A1 relates to a spacecraft wall comprising a panel, at least one capillary heat pipe arranged on at least a portion of the panel, female attachment bodies attached to the panel so as to protrude relative to said at least one capillary heat pipe, at least one heat-emitting device carried by and in direct contact with said female attachment bodies, a layer of thermally-conductive and self-curing paste arranged between said at least one capillary heat pipe and the heat-emitting device, and a male attachment member suitable for attaching said heat-emitting device to the female attachment body. US 5314146 A relates to a multi-mission spacecraft bus structure that has panels secured together, with the bus structure sealed at top and bottom, and equipment bays secured on external mounting surfaces.

### SUMMARY OF THE INVENTION

The claims, rather than the Summary, define covered embodiments of the present invention. The Summary is a high-level overview of various aspects of the invention, and introduces some concepts that are further described in the Detailed Description below. The Summary is not intended to identify key or essential features of the claimed subject matter, and also is not intended to be used in isolation to determine the scope of the claimed subject matter. Instead, the claimed subject matter should be understood by reference to appropriate portions of the Specification and drawings, as well as to each claim.

In some embodiments, a space vehicle includes a first aluminum panel; a second aluminum panel fixed to the first aluminum panel around at least a portion of respective perimeters thereof to thereby form an enclosed structure having an interior volume; a plurality of grooves formed in at least one of the first aluminum panel or the second aluminum panel, where the plurality of grooves face an interior of the space vehicle; at least one heat transport element positioned in at least one of the plurality of grooves; a conductive filler positioned between the heat transport element and an interior surface of the at least one of the plurality of grooves so as to adhere the at least one heat transport element to the at least one of the plurality of grooves; and a plurality of onboard equipment elements positioned within the interior volume of the space vehicle, where at least one of the plurality of onboard equipment elements is positioned adjacent to the heat transport element, where at least some of the plurality of onboard equipment elements lack a casing, where the conductive filler is configured to transport heat from the plurality of onboard equipment elements to the at least one heat transport element, and where the at least one heat transport element is configured to transport heat away from the plurality of onboard equipment elements.

In some embodiments, the plurality of grooves are oriented parallel to one another.

In some embodiments, the at least one heat transport element includes at least one of a copper-water heat pipe, a carbon nanotube based material, an aluminum-ammonia heat pipe or a carbon nanotube.

In some embodiments, the heat transport element has a heat flux density that is in a range of from 2 W/m² to 20 W/m².

In some embodiments, the heat transport element has a thermal conductivity that is at least 1,000 W/m/K.

In some embodiments, the heat transport element has a heat transport capacity that is a range of 10 W to 1,000 W.

In some embodiments, the conductive filler has a thermal conductivity that is in a range of 100 W/m/K to 1000 W/m/K in plane.

In some embodiments, the plurality of grooves comprises from 4 grooves to 20 grooves.

In some embodiments, a method includes providing a quantity of aluminum sheet metal; press-forming a first panel from the aluminum sheet metal to form a first stamped panel; press-forming a second panel from the aluminum sheet metal to form a second stamped panel; forming a plurality of grooves in at least one of the first stamped panel or the second stamped panel; positioning at least one heat transport element in at least one of the plurality of grooves; providing at least one onboard equipment component; fixing the at least one onboard equipment component to the first stamped panel, where at least one of the plurality of onboard equipment elements is positioned adjacent to the heat transport element, where at least some of the plurality of onboard equipment elements lack a casing, and where the at least one heat transport element is configured to transport heat away from the plurality of onboard equipment elements; and sealing the first panel to the second panel to form a space vehicle.

In some embodiments, sealing the first panel to the second panel comprises welding at least a portion of a perimeter of the first stamped panel to a least a portion of a perimeter of the second stamped panel.

In some embodiments, sealing the first panel to the second panel comprises welding an entire perimeter of the first stamped panel to an entire perimeter of the second stamped panel.

### BRIEF DESCRIPTION OF THE FIGURES

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent how embodiments of the invention may be practiced.
Figure 1 shows a perspective view of an exemplary space vehicle, according to embodiments of the present disclosure.
Figure 2 shows a perspective view of an exemplary space vehicle, according to embodiments of the present disclosure.
Figure 3 shows a perspective view of a panel of an exemplary space vehicle, according to embodiments of the present disclosure.
Figure 4 shows an exploded perspective view of panels of an exemplary space vehicle, according to embodiments of the present disclosure.
Figure 5 shows an exploded perspective view of panels of an exemplary space vehicle, according to embodiments of the present disclosure.
Figure 6 shows elements of an exemplary space vehicle, according to embodiments of the present disclosure.
Figure 7 shows elements of an exemplary space vehicle including stamped grooves and heat transport elements, according to embodiments of the present disclosure.
Figure 8A shows a perspective view of elements of an exemplary space vehicle including stamped grooves that are shaped to receive heat transport elements.
Figure 8B shows a top view of the elements of the exemplary space vehicle shown in Figure 8A.

### DETAILED DESCRIPTION OF THE INVENTION

The following description provides exemplary embodiments only. Rather, the following description of the exemplary embodiments will provide those skilled in the art with an enabling description for implementing one or more exemplary embodiments. It will be understood that various changes may be made in the function and arrangement of elements without departing from the scope of the invention as defined by the claims. Embodiment examples are described as follows with reference to the figures. Identical, similar, or identically acting elements in the various figures are identified with identical reference numbers and a repeated description of these elements is omitted in part to avoid redundancies.

Throughout the specification, the following terms take the meanings explicitly associated herein, unless the context clearly dictates otherwise. The phrases "in one embodiment" and "in some embodiments" as used herein do not necessarily refer to the same embodiment(s), though it may. Furthermore, the phrases "in another embodiment" and "in some other embodiments" as used herein do not necessarily refer to a different embodiment, although it may.

In addition, the term "based on" is not exclusive and allows for being based on additional factors not described, unless the context clearly dictates otherwise. In addition, throughout the specification, the meaning of "a," "an," and "the" include plural references. The meaning of "in" includes "in" and "on."

As used herein, the terms "and" and "or" may be used interchangeably to refer to a set of items in both the conjunctive and disjunctive in order to encompass the full description of combinations and alternatives of the items. By way of example, a set of items may be listed with the disjunctive "or", or with the conjunction "and." In either case, the set is to be interpreted as meaning each of the items singularly as alternatives, as well as any combination of the listed items.

Disjunctive language such as the phrase "at least one of X, Y, or Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

The exemplary embodiments described herein relate to space vehicles, such as satellites, having outer shells made from stamped aluminum panels. The exemplary embodiments described herein also relate to methods for manufacture of such space vehicles.

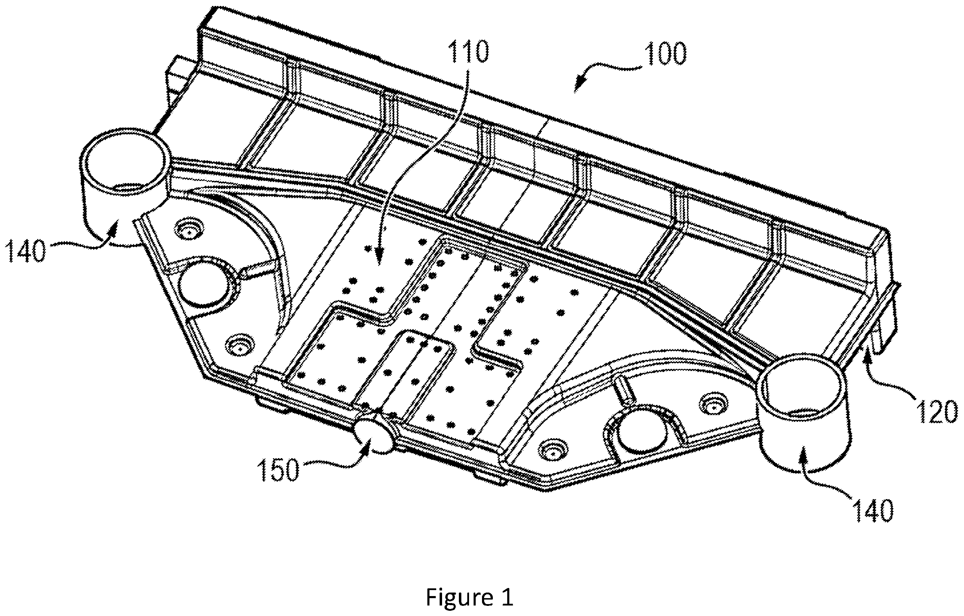

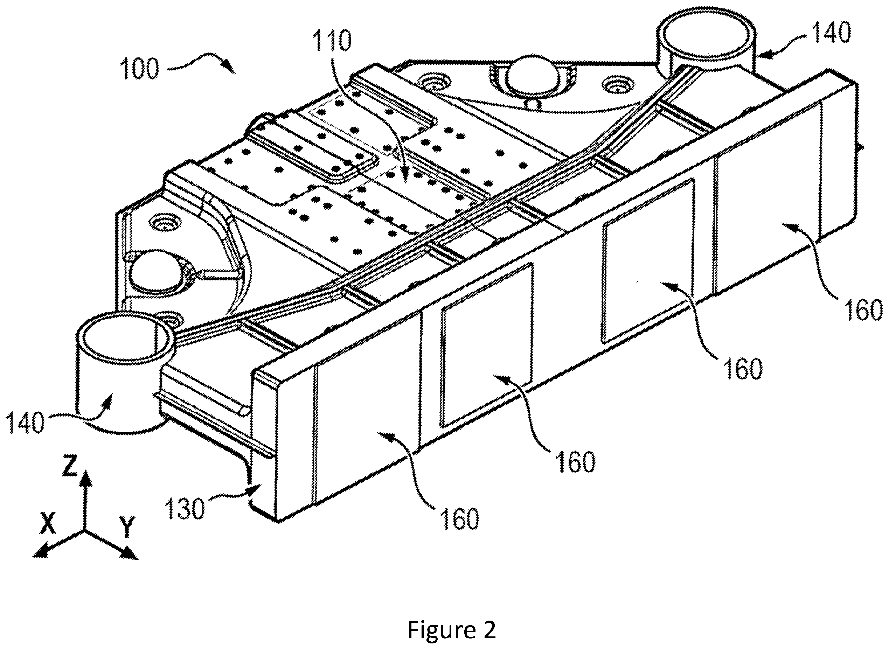

Figures 1 and 2 show perspective views of opposite sides of an exemplary space vehicle 100, according to exemplary embodiments of the present disclosure. In some embodiments, an exemplary space vehicle 100 includes a first panel 110 and a second panels 120 forming an outer shell of the space vehicle 100. In some embodiments, the first and second panels 110, 120 are not honeycomb panels. In some embodiments, the first and second panels 110, 120 includes a metal. In some embodiments, the panels 110, 120 include a metal alloy. In some embodiments, the metal alloy includes at least one of an aluminum alloy, a steel alloy, and/or combinations thereof. In some embodiments, the aluminum alloy includes aluminum and zinc. In some embodiments, the aluminum alloy is a 7000-series aluminum alloy. In some embodiments, the aluminum alloy is 7075 aluminum. In some embodiments, the aluminum alloy is any aluminum alloy that can be formed by stamping or press-forming. In some embodiments, the aluminum panels 110, 120 are press-formed. In some embodiments, the aluminum panels 110, 120 are press-formed from sheet aluminum. In some embodiments, the metal alloy includes an alloy other than steel and/or aluminum. In some embodiments, the panels 110, 120 include a composite. In some embodiments, the panels 110, 120 include a fiber composite. In some embodiments, the fiber composite includes at least one of a carbon fiber composite and/or a glass fiber composite.

In some embodiments, the sheet aluminum has a thickness that is from 0.1 millimeter to 10 millimeters. In some embodiments, the sheet aluminum has a thickness that is from 1 millimeter to 10 millimeter. In some embodiments, the sheet aluminum has a thickness that is from 2 millimeter to 10 millimeters. In some embodiments, the sheet aluminum has a thickness that is from 5 millimeter to 10 millimeters.

In some embodiments, the sheet aluminum has a thickness that is from 0.1 millimeter to 5 millimeters. In some embodiments, the sheet aluminum has a thickness that is from 0.1 millimeter to 2 millimeters. In some embodiments, the sheet aluminum has a thickness that is from 0.1 millimeter to 1 millimeters.

In some embodiments, the sheet aluminum has a thickness that is from 1 millimeter to 3 millimeters. In some embodiments, the sheet aluminum has a thickness that is from 3 millimeters to 5 millimeters. In some embodiments, the sheet aluminum has a thickness that is from 5 millimeters to 10 millimeters. In some embodiments, the sheet aluminum is 1 millimeter in thickness. In some embodiments, the sheet aluminum is 2 millimeters in thickness.

In some embodiments, the aluminum sheet may include at least one thickening panel. In some embodiments, the at least one thickening panel may be formed as a result of the stamping process. In some embodiments, the sheet aluminum has a first thickness (e.g., 0.1 millimeter) in some regions and has one or more regions having a greater second thickness (e.g., 2 millimeters) provided by the addition of the at least one thickening panel .

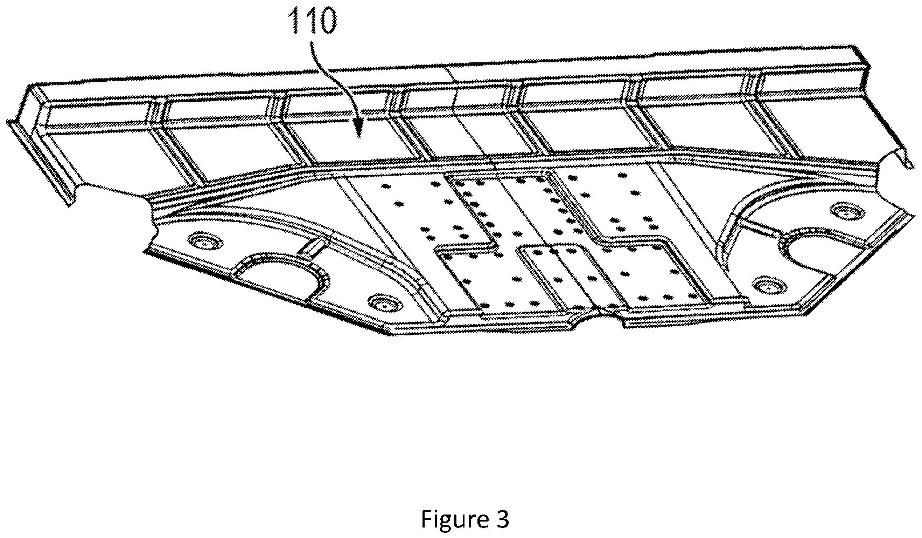

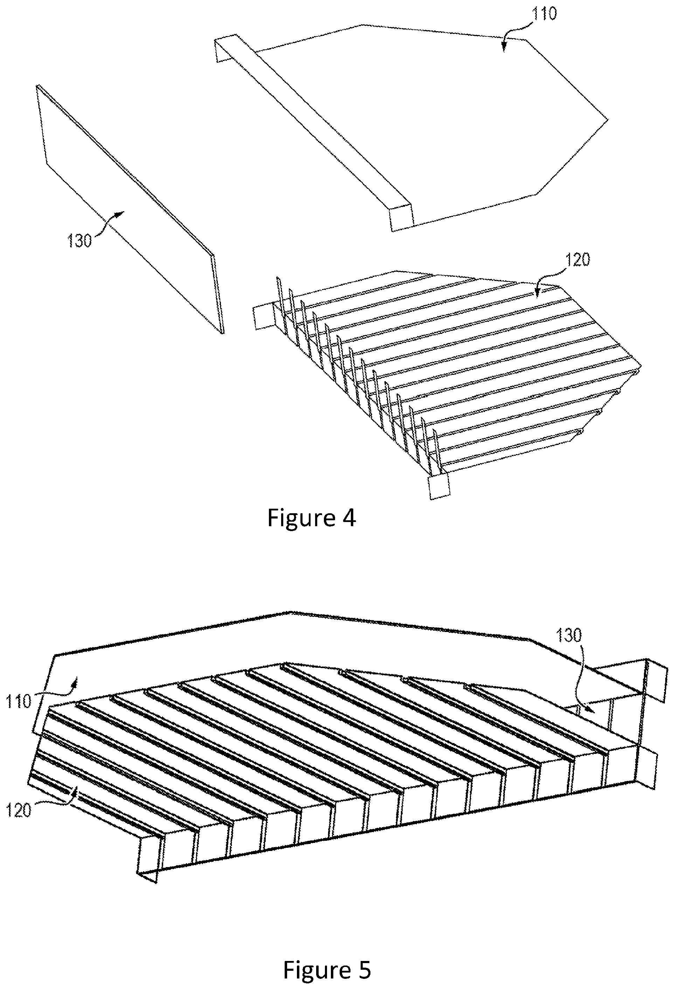

In some embodiments, the first and second panels 110, 120 may be joined to one another around the respective perimeters thereof to form an enclosed structure. In some embodiments, the entire perimeters of the first and second panels 110, 120 are joined to one another, thereby to form an enclosed structure. In some embodiments, less than the entire perimeters of the first and second panels 110, 120 are joined to one another. In some embodiments, the first and second panels 110, 120 are welded to one another. In some embodiments, the first and second panels 110, 120 are welded to one another by spot welding, laser welding, or any other welding technique. In some embodiments, the first and second panels 110, 120 may be welded at discrete points along the respective perimeters thereof. In some embodiments, the first and second panels 110, 120 may be continuously welded along the respective perimeters thereof. In some embodiments the first and second panels 110, 120 are hermetically sealed. In some embodiments, the first and second panels 110, 120 are not hermetically sealed. Figure 3 shows an exploded perspective view of the exemplary panel 110. Figure 4 shows an exploded perspective view of the exemplary panels 110 and 120, together with an earth deck panel 130 that is configured to be positioned at a location of the space vehicle 100 that faces toward Earth when the space vehicle 100 is in orbit. Figure 5 shows an additional perspective view of the panels 110 and 120 and the earth deck panel 130.

Referring back to Figures 1 and 2, in some embodiments, the exterior of the space vehicle 100 includes one or more stacking pillars 140. In some embodiments, the exterior of the space vehicle 100 includes a mounting interface for solar array wings. In some embodiments, the exterior of the space vehicle 100 includes one or more antenna modules 160 (e.g., transmitting antenna modules and receiving antenna modules). In some embodiments, the one or more stacking pillars 140 includes two stacking pillars 140. In some embodiments, the one or more stacking pillars 140 includes two to four stacking pillars 140. In some embodiments, the one or more stacking pillars 140 includes three to four stacking pillars 140.

In some embodiments, the first and second panels 110, 120 may include respective pass-throughs to allow external elements of the space vehicle 100 to be coupled (e.g., communicatively) to internal elements of the space vehicle 100. In some embodiments, the pass-throughs may be holes that extend through a thickness of the respective first and second panels 110, 120.

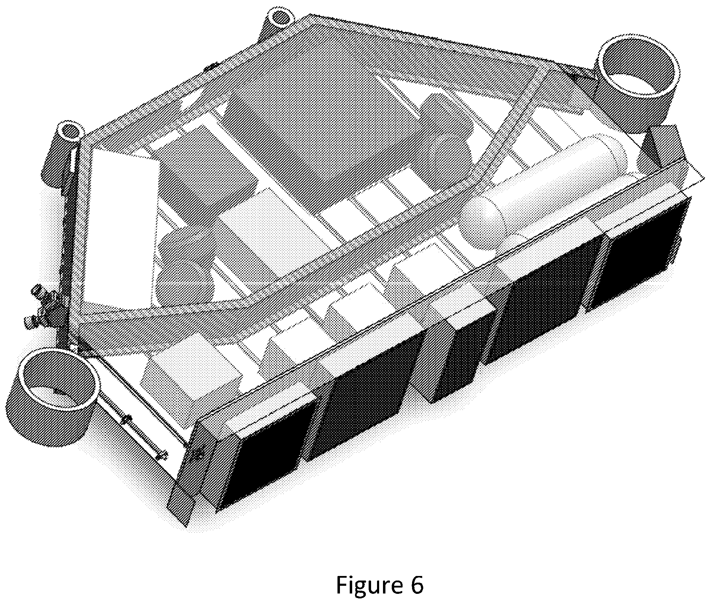

In some embodiments, as depicted in Figure 6, an exemplary space vehicle 100 includes onboard equipment, such as platform equipment and payloads. In some embodiments, exemplary onboard equipment may include an on-board computer, an optical inter satellites link transceiver, a power condition and distribution unit, an on-board processor, an optical terminal, one or more reaction wheels, a power processing unit, one or more gateway interface unit, and/or a battery. The specific onboard equipment listed above is only exemplary and the equipment that will be included in the exemplary space vehicle 100 will vary among different implementations. In some embodiments, onboard equipment have their respective casings removed and are mounted within the exemplary space vehicle by mounting directly to one of the panels.

In some embodiments, the first and second panels 110, 120 of an exemplary space vehicle may be configured as an upper panel and a lower panel. In some embodiments, the upper panel and lower panel are attached to one another to form an enclosed body within which platform hardware and payloads are accommodated. In some embodiments, the interior of an exemplary space vehicle (e.g., an interior space as defined between two joined aluminum panels) is pressurized. In some embodiments, the exterior of the exemplary space vehicle (e.g., the perimeter of the first and second panels 110, 120 described above) is hermetically sealed in order to allow the interior to be pressurized. In some embodiments the interior is pressurized to a pressure that is in a range of from 1 bar to 2 bar. In some embodiments, the interior pressure is from 1.2 bar to 2 bar. In some embodiments, the interior pressure is from 1.4 bar to 2 bar. In some embodiments, the interior pressure is from 1.6 bar to 2 bar. In some embodiments, the interior pressure is from 1.8 bar to 2 bar.

In some embodiments the interior is pressurized to a pressure that is in a range of from 1 bar to 1.8 bar. In some embodiments, the interior pressure is from 1 bar to 1.6 bar. In some embodiments, the interior pressure is from 1 bar to 1.4 bar. In some embodiments, the interior pressure is from 1 bar to 1.2 bar.

In some embodiments, the interior pressure is from 1.2 bar to 1.8 bar. In some embodiments, the interior pressure is from 1.4 bar to 1.6 bar. In some embodiments, the interior pressure is from 1.6 bar to 1.8 bar. In some embodiments, the interior pressure is from 1.2 bar to 1.4 bar.

In some embodiments, the interior is pressurized with a gas. In some embodiments, the gas is a convection gas. In some embodiments, the convection gas facilitates convection of heat within the space vehicle. In some embodiments, the gas is nitrogen.

In some embodiments, the press-formed first and second panels 110, 120 include grooves formed in surfaces that are configured to face the interior of the space vehicle 100. In some embodiments, the grooves 700 are configured (e.g., sized and shaped) to receive heat transport elements therein. In some embodiments, the grooves 700 provide additional stiffness to the first and second panels 110, 120. In some embodiments, the grooves 700 are sized and shaped to receive heat transport elements that have a 5 mm to 50 mm cross-section. In some embodiments, the grooves 700 are sized to receive heat transport elements that have a 5 mm to 40 mm cross-section. In some embodiments, the grooves 700 are sized to receive heat transport elements that have a 5 mm to 30 mm cross-section. In some embodiments, the grooves 700 are sized to receive heat transport elements that have a 5 mm to 20 mm cross-section. In some embodiments, the grooves 700 are sized to receive heat transport elements that have a 5 mm to 10 mm cross-section.

In some embodiments, the grooves 700 are sized to receive heat transport elements that have a 10 mm to 50 mm cross-section. In some embodiments, the grooves 700 are sized to receive heat transport elements that have a 20 mm to 50 mm cross-section. In some embodiments, the grooves 700 are sized to receive heat transport elements that have a 30 mm to 50 mm cross-section. In some embodiments, the grooves 700 are sized to receive heat transport elements that have a 40 mm to 50 mm cross-section.

In some embodiments, the grooves 700 are sized to receive heat transport elements that have a 10 mm to 40 mm cross-section. In some embodiments, the grooves 700 are sized to receive heat transport elements that have a 20 mm to 30 mm cross-section. In some embodiments, the grooves 700 are sized to receive heat transport elements that have a 30 mm to 40 mm cross-section. In some embodiments, the grooves 700 are sized to receive heat transport elements that have a 10 mm to 30 mm cross-section.

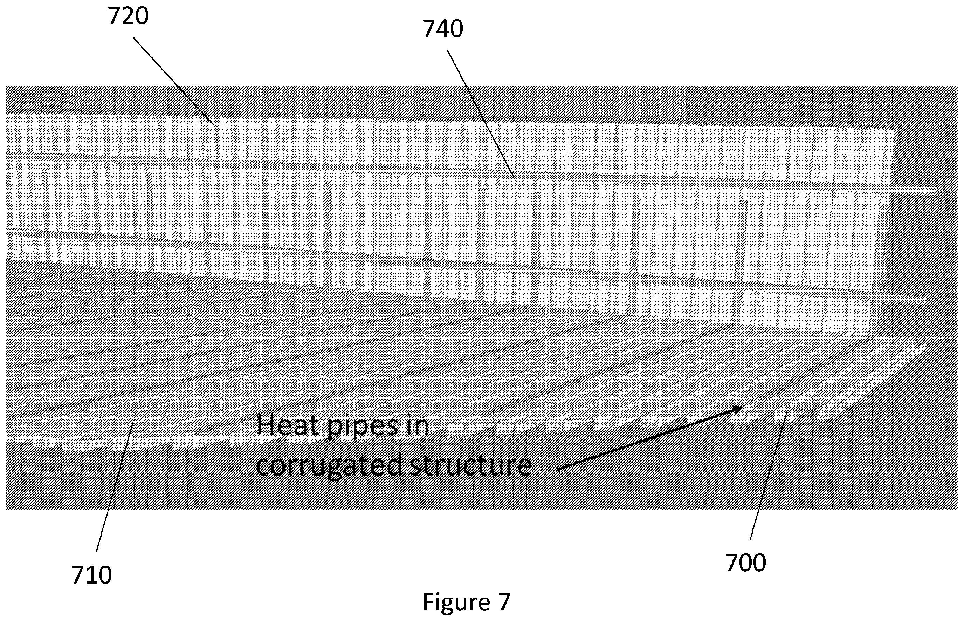

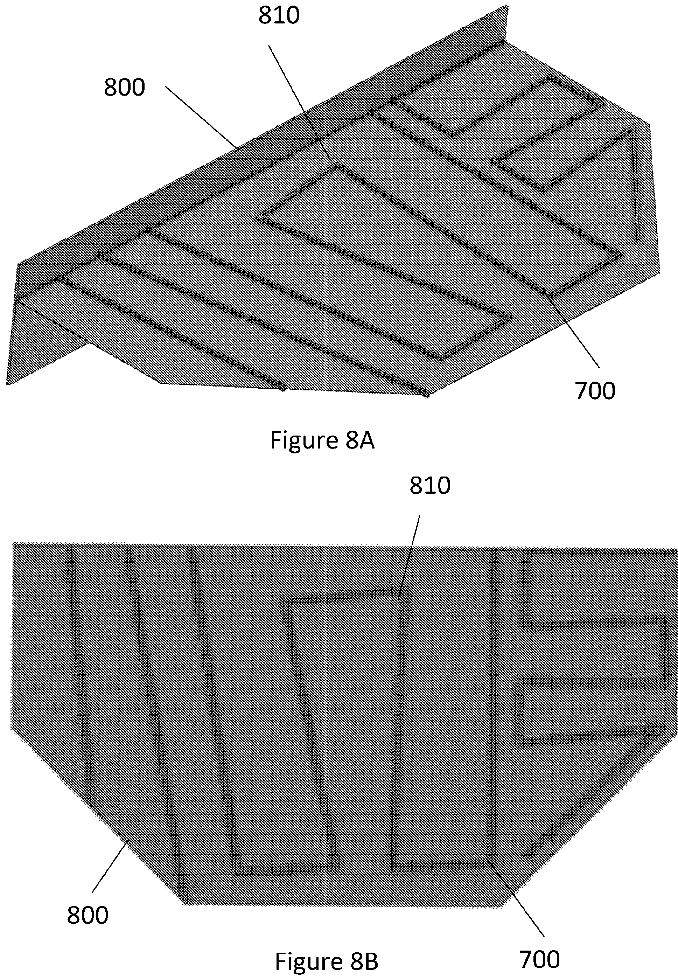

In some embodiments, grooves 700 are also formed in the earth deck panel. Figure 7 shows an exemplary panel 710 and earth deck panel 720 with grooves 700 formed therein. In some embodiments, such as shown in Figure 7, the grooves 700 are oriented linearly, such as in parallel lines. In some embodiments, the grooves 700 are not oriented linearly, but can be positioned in any desired pattern or orientation that allows heat transport elements to transport heat to and from appropriate locations on the space vehicle 100. For example, Figures 8A and 8B provide another exemplary pattern of grooves where heat transport elements may be mounted for optimized routing to maximize heat collection, heat transport and heat dissipation. The specific patterns of the grooves 700 shown in Figure 7 is only exemplary, and other embodiments of panels may have differing two-dimensional patterns without departing from the broader principles described herein. For clarity, Figure 7 includes a reference numeral identifying a single one of the grooves 700, but this term and the accompanying description refers to other exemplary grooves as well. In some embodiments, each of the panels 110, 120 includes from 4 grooves to 20 grooves. In some embodiments, each of the panels 110, 120 includes from 8 grooves to 20 grooves. In some embodiments, each of the panels 110, 120 includes from 12 grooves to 20 grooves. In some embodiments, each of the panels 110, 120 includes from 16 grooves to 20 grooves.

In some embodiments, each of the panels 110, 120 includes from 4 grooves to 16 grooves. In some embodiments, each of the panels 110, 120 includes from 4 grooves to 12 grooves. In some embodiments, each of the panels 110, 120 includes from 4 grooves to 8 grooves.

In some embodiments, each of the panels 110, 120 includes from 12 grooves to 16 grooves. In some embodiments, each of the panels 110, 120 includes from 10 grooves to 18 grooves. In some embodiments, each of the panels 110, 120 includes from 6 grooves to 16 grooves. In some embodiments, each of the panels 110, 120 includes from 10 grooves to 12 grooves.

In some embodiments, heat transport elements are embedded in at least some of the grooves 700. In the embodiment shown in Figure 7, heat transport elements 740 are embedded in some of the grooves 700. In some embodiments, heat transport elements 740 may be any component that is configured to transport heat to and from appropriate locations on the space vehicle 100. In some embodiments, the heat transport elements 740 include copper-water heat pipes. In some embodiments, the heat transport elements 740 include aluminum-ammonia heat pipes such as the heat pipes commercialized by Advanced Cooling Technologies of Lancaster, Pennsylvania, or by Euro Heat Pipes of Nivelles, Belgium. In some embodiments, the heat transport elements described herein (e.g., the heat transport element 740) are linear, L-shaped, U-shaped, or have a more complex shape, in order to allow for such heat pipes to be positioned and to convey heat from and to appropriate locations within a satellite structure (e.g., from an onboard component to a radiator). In some embodiments, the heat transport element 740 is a heat spreader, such as a heat spreader made from carbon nanotubes. For clarity, Figure 7 includes a reference numeral identifying a single one of the heat transport elements 740, but this term and the accompanying description refers to other exemplary heat transport elements as well.

In some embodiments, any of the heat transport elements 740 described herein has a heat flux density that is in the range of 2 W/m² to 20 W/m². In some embodiments, any of the heat transport elements 740 described herein has a heat flux density that is in the range of 2 W/m² to 15 W/m². In some embodiments, any of the heat transport elements 740 described herein has a heat flux density that is in the range of 2 W/m² to 10 W/m². In some embodiments, any of the heat transport elements 740 described herein has a heat flux density that is in the range of 2 W/m² to 5 W/m².

In some embodiments, any of the heat transport elements 740 described herein has a heat flux density that is in the range of 5 W/m² to 20 W/m². In some embodiments, any of the heat transport elements 740 described herein has a heat flux density that is in the range of 10 W/m² to 20 W/m². In some embodiments, any of the heat transport elements 740 described herein has a heat flux density that is in the range of 15 W/m² to 20 W/m².

In some embodiments, any of the heat transport elements 740 described herein has a heat flux density that is in the range of 5 W/m² to 15 W/m². In some embodiments, any of the heat transport elements 740 described herein has a heat flux density that is in the range of 12 W/m² to 18 W/m². In some embodiments, any of the heat transport elements 740 described herein has a heat flux density that is in the range of 4 W/m² to 16 W/m². In some embodiments, any of the heat transport elements 740 described herein has a heat flux density that is in the range of 5 W/m² to 10 W/m².

In some embodiments, any of the heat transport elements 740 described herein has a thermal conductivity that is greater than 1,000 W/m/K. In some embodiments, any of the heat transport elements 740 described herein has a thermal conductivity that is greater than 2,000 W/m/K. In some embodiments, any of the heat transport elements 740 described herein has a thermal conductivity that is greater than 3,000 W/m/K. In some embodiments, any of the heat transport elements 740 described herein has a thermal conductivity that is between 1,000 W/m/K and 100,000 W/m/K. In some embodiments, any of the heat transport elements 740 described herein has a thermal conductivity that is between 2,000 W/m/K and 100,000 W/m/K. In some embodiments, any of the heat transport elements 740 described herein has a thermal conductivity that is between 10,000 W/m/K and 100,000 W/m/K. In some embodiments, any of the heat transport elements 740 described herein has a thermal conductivity that is between 20,000 W/m/K and 100,000 W/m/K. In some embodiments, any of the heat transport elements 740 described herein has a thermal conductivity that is between 50,000 W/m/K and 100,000 W/m/K.

In some embodiments, any of the heat transport elements 740 described herein has a thermal conductivity that is between 2,000 W/m/K and 50,000 W/m/K. In some embodiments, any of the heat transport elements 740 described herein has a thermal conductivity that is between 10,000 W/m/K and 20,000 W/m/K. In some embodiments, any of the heat transport elements 740 described herein has a thermal conductivity that is between 5,000 W/m/K and 10,000 W/m/K. In some embodiments, any of the heat transport elements 740 described herein has a thermal conductivity that is between 5,000 W/m/K and 50,000 W/m/K. In some embodiments, any of the heat transport elements 740 described herein has a thermal conductivity that is between 20,000 W/m/K and 50,000 W/m/K.

In some embodiments, any of the heat transport elements 740 described herein has a heat transport capacity that is in the range of 10 W to 1,000 W. In some embodiments, any of the heat transport elements 740 described herein has a heat transport capacity that is in the range of 50 W to 1,000 W. In some embodiments, any of the heat transport elements 740 described herein has a heat transport capacity that is in the range of 100 W to 1,000 W. In some embodiments, any of the heat transport elements 740 described herein has a heat transport capacity that is in the range of 500 W to 1,000 W.

In some embodiments, any of the heat transport elements 740 described herein has a heat transport capacity that is in the range of 10 W to 500 W. In some embodiments, any of the heat transport elements 740 described herein has a heat transport capacity that is in the range of 10 W to 100 W. In some embodiments, any of the heat transport elements 740 described herein has a heat transport capacity that is in the range of 10 W to 50 W.

In some embodiments, any of the heat transport elements 740 described herein has a heat transport capacity that is in the range of 50 W to 300 W. In some embodiments, any of the heat transport elements 740 described herein has a heat transport capacity that is in the range of 100 W to 300 W. In some embodiments, any of the heat transport elements 740 described herein has a heat transport capacity that is in the range of 100 W to 500 W. In some embodiments, any of the heat transport elements 740 described herein has a heat transport capacity that is in the range of 50 W to 500 W.

In some embodiments, any of the heat transport elements 740 described herein has a linear cross-sectional dimension that is in the range of 5 mm to 50 mm and can have a cross-sectional size selected based on the amount of heat required to be conveyed thereby. In some embodiments, any of the heat transport elements 740 described herein has a linear cross-sectional dimension that is in the range of 5 mm to 40 mm. In some embodiments, any of the heat transport elements 740 described herein has a linear cross-sectional dimension that is in the range of 5 mm to 30 mm. In some embodiments, any of the heat transport elements 740 described herein has a linear cross-sectional dimension that is in the range of 5 mm to 20 mm. In some embodiments, any of the heat transport elements 740 described herein has a linear cross-sectional dimension that is in the range of 5 mm to 10 mm.

In some embodiments, any of the heat transport elements 740 described herein has a linear cross-sectional dimension that is in the range of 10 mm to 50 mm. In some embodiments, any of the heat transport elements 740 described herein has a linear cross-sectional dimension that is in the range of 20 mm to 50 mm. In some embodiments, any of the heat transport elements 740 described herein has a linear cross-sectional dimension that is in the range of 30 mm to 50 mm. In some embodiments, any of the heat transport elements 740 described herein has a linear cross-sectional dimension that is in the range of 40 mm to 50 mm.

In some embodiments, any of the heat transport elements 740 described herein has a linear cross-sectional dimension that is in the range of 10 mm to 40 mm. In some embodiments, any of the heat transport elements 740 described herein has a linear cross-sectional dimension that is in the range of 20 mm to 30 mm. In some embodiments, any of the heat transport elements 740 described herein has a linear cross-sectional dimension that is in the range of 30 mm to 40 mm. In some embodiments, any of the heat transport elements 740 described herein has a linear cross-sectional dimension that is in the range of 10 mm to 20 mm.

In some embodiments, the heat transport elements 740 are secured in the grooves 700 using a conductive filler. In some embodiments, a suitable conductive filler provides sufficient thermal conductivity to convey heat from an onboard equipment element located adjacent to one of the grooves 700 to one of the heat transport elements 740, and also provides sufficient adhesion to provide sufficient thermal conductivity while compensating for some degree of surface roughness either within the grooves 700 and/or on the surface of the heat transport elements 740. In some embodiments, the conductive filler has a thermal conductivity that is in a range of from 100 W/m/K to 1000 W/m/K in plane (e.g., in a direction along the conductive filler perpendicular to the cross-plane direction). In some embodiments, the conductive filler has a thermal conductivity that is in a range of from 1 W/m/K to 30 W/m/K cross-plane (e.g., in a direction across the conductive filler between one of the heat pipes 740 and the surface of a surrounding one of the grooves 700). In some embodiments, the conductive filler has sufficient adhesion to compensate for surface roughness that is in a range of from 0 microns (e.g., a perfectly smooth surface with no pores, gaps, etc.) to 500 microns. In some embodiments, suitable fillers include the filler commercialized under the trade name MAPSIL by Map Space Coatings of Mazeres, France, the filler commercialized under the trade name SIGRAFLEX by SGL Carbon of Charlotte, North Carolina, the filler commercialized under the trade name T-PLI by Laird Technologies of Chesterfield, Missouri, and the filler commercialized under the trade name THERM-A-GAP by Parker Chomerics of Woburn, Massachusetts.

In some embodiments, the press-formed aluminum panels include equipment fixation locations, which are locations to which equipment (e.g., platform elements and payloads) may be secured. Figures 8A and 8B shows a perspective view and a top view, respectively of an embodiment of an exemplary panel 800 having instrument fixation locations 810 and grooves 700 (only one of each of which is specifically identified in Figures 8A and 8B for clarity). In some embodiments, the grooves 700 are positioned proximate to (e.g., extending away from) the payload fixation locations 810 such that heat transport elements received therein will be thermally coupled to payload elements secured at the payload fixation locations 810, thereby to conduct heat away from such payload elements. In some embodiments, the space vehicle includes one or more radiators configured to radiate heat from the space vehicle into space. In some embodiments, the grooves 700 extend from the payload fixation locations 810 and toward a location from which heat is to be radiated, such as a radiator. For clarity, Figure 7 includes a reference numeral identifying a single one of the payload fixation locations 810 and a single one of the grooves 700, but these terms and the accompanying descriptions refer to other exemplary payload fixation locations and grooves as well.

In some embodiments, a process for making an exemplary space vehicle 100 includes providing aluminum sheets; press-forming the aluminum sheets to produce a first stamped panel and a second stamped panel, wherein a groove is formed in the first stamped panel; positioning a heat transport element in the groove; fixing an onboard equipment element to the first stamped panel so as to overlay the heat transport element, wherein at least one of the plurality of onboard equipment elements has a casing removed therefrom; and sealing the first stamped panel to the second stamped panel to seal the space vehicle.

By providing a space vehicle structure made of stamped panels, the exemplary embodiments provide space vehicles that can be designed and manufactured at a lower overall cost than space vehicles that incorporate honeycomb panels. Additionally, by incorporating grooves for receiving heat transport elements directly into the stamped material of the stamped panels, heat transport elements may be incorporated where appropriate and without inclusion of additional elements to accommodate the heat transport elements.

While a number of embodiments of the present invention have been described, it is understood that these embodiments are illustrative only, and not restrictive. For example, all dimensions discussed herein are provided as examples only, and are intended to be illustrative and not restrictive.

## Claims

1. A space vehicle (100) comprising:
a first aluminum panel (110);
a second aluminum panel (120) fixed to the first aluminum panel (110) around at least a portion of respective perimeters thereof to thereby form an enclosed structure having an interior volume;
a plurality of grooves (700) formed in at least one of the first aluminum panel (110) or the second aluminum panel (120),
wherein the plurality of grooves (700) face an interior of the space vehicle (100);
at least one heat transport element (740) positioned in at least one of the plurality of grooves (700);
a conductive filler positioned between the heat transport element (740) and an interior surface of the at least one of the plurality of grooves (700) so as to adhere the at least one heat transport element (740) to the at least one of the plurality of grooves (700); and
a plurality of onboard equipment elements positioned within the interior volume of the space vehicle (100),
wherein at least one of the plurality of onboard equipment elements is positioned adjacent to the heat transport element (740),
wherein at least some of the plurality of onboard equipment elements lack a casing,
wherein the conductive filler is configured to transport heat from the plurality of onboard equipment elements to the at least one heat transport element (740), and
wherein the at least one heat transport element (740) is configured to transport heat away from the plurality of onboard equipment elements.

2. The space vehicle (100) of claim 1, wherein the plurality of grooves (700) are oriented parallel to one another.

3. The space vehicle (100) of claim 1, wherein the at least one heat transport element (740) comprises at least one of a copper-water heat pipe, a carbon nanotube based material, an aluminum-ammonia heat pipe or a carbon nanotube.

4. The space vehicle (100) of claim 1, wherein the heat transport element (740) has a heat flux density that is in a range of from 2 W/m² to 20 W/m².

5. The space vehicle (100) of claim 1, wherein the heat transport element (740) has a thermal conductivity that is at least 1,000 W/m/K.

6. The space vehicle (100) of claim 1, wherein the heat transport element (740) has a heat transport capacity that is a range of 10 W to 1,000 W.

7. The space vehicle (100) of claim 1, wherein the conductive filler has a thermal conductivity that is in a range of 100 W/m/K to 1000 W/m/K in plane.

8. The space vehicle (100) of claim 1, wherein the plurality of grooves (700) comprises from 4 grooves to 20 grooves (700).

9. A method comprising:
providing a quantity of aluminum sheet metal;
press-forming a first panel from the aluminum sheet metal to form a first stamped panel;
press-forming a second panel from the aluminum sheet metal to form a second stamped panel;
forming a plurality of grooves (700) in at least one of the first stamped panel or the second stamped panel;
positioning at least one heat transport element (740) in at least one of the plurality of grooves (700);
providing at least one onboard equipment component;
fixing the at least one onboard equipment component to the first stamped panel,
wherein at least one of the plurality of onboard equipment elements is positioned adjacent to the heat transport element (740), wherein at least some of the plurality of onboard equipment elements lack a casing, and
wherein the at least one heat transport element (740) is configured to transport heat away from the plurality of onboard equipment elements;
sealing the first panel to the second panel to form an outer shell of a space vehicle (100).

10. The method of claim 9, wherein sealing the first panel to the second panel comprises welding at least a portion of a perimeter of the first stamped panel to a least a portion of a perimeter of the second stamped panel.

11. The method of claim 9, wherein sealing the first panel to the second panel comprises welding an entire perimeter of the first stamped panel to an entire perimeter of the second stamped panel.

## Patentansprüche

1. Raumfahrzeug (100) mit:
einer ersten Aluminiumplatte (110);
einer zweiten Aluminiumplatte (120), die an der ersten Aluminiumplatte (110) an mindestens einem Abschnitt ihrer jeweiligen Umfänge befestigt ist, um so eine geschlossene Struktur mit einem Innenvolumen zu bilden;
einer Vielzahl von Nuten (700), die in mindestens einer der ersten Aluminiumplatte (110) bzw. der zweiten Aluminiumplatte (120) ausgebildet sind, wobei die Vielzahl von Nuten (700) einem Innenraum des Raumfahrzeugs (100) zugewandt ist;
mindestens einem Wärmeträgerelement (740), das in mindestens einer der Vielzahl von Nuten (700) angeordnet ist;
einem leitfähigen Füllmaterial, das zwischen dem Wärmeträgerelement (740) und einer Innenfläche der mindestens einen der Vielzahl von Nuten (700) angeordnet ist, um das mindestens eine Wärmeträgerelement (740) an der mindestens einen der Vielzahl von Nuten (700) zu befestigen; und
einer Vielzahl von Bordgeräteelementen, die innerhalb des Innenraums des Raumfahrzeugs (100) angeordnet sind,
wobei mindestens eines der mehreren Bordgeräteelemente benachbart zu dem Wärmeträgerelement (740) angeordnet ist,
wobei zumindest einige der Vielzahl an Bordgeräteelementen kein Gehäuse aufweisen,
wobei das leitfähige Füllmaterial so ausgelegt ist, dass es Wärme von den Bordgeräteelementen zu dem mindestens einen Wärmeträgerelement (740) transportiert, und
wobei das mindestens eine Wärmeträgerelement (740) so ausgelegt ist, dass es die Wärme von der Vielzahl an Bordgeräteelementen abführt.

2. Raumfahrzeug (100) nach Anspruch 1, bei dem die Vielzahl von Nuten (700) parallel zueinander ausgerichtet sind.

3. Raumfahrzeug (100) nach Anspruch 1, bei dem das mindestens eine Wärmeträgerelement (740) mindestens eines der folgenden Elemente umfasst: ein Kupfer-Wasser-Wärmerohr, ein Material auf Basis von Kohlenstoffnanoröhren, ein Aluminium-Ammoniak-Wärmerohr oder eine Kohlenstoffnanoröhre.

4. Raumfahrzeug (100) nach Anspruch 1, bei dem das Wärmeträgerelement (740) eine Wärmestromdichte im Bereich von 2 W/m² bis 20 W/m² aufweist.

5. Raumfahrzeug (100) nach Anspruch 1, bei dem das Wärmeträgerelement (740) eine Wärmeleitfähigkeit von mindestens 1 000 W/m/K aufweist.

6. Raumfahrzeug (100) nach Anspruch 1, bei dem das Wärmeträgerelement (740) eine Wärmetransportkapazität im Bereich von 10 W bis 1 000 W aufweist.

7. Raumfahrzeug (100) nach Anspruch 1, bei dem das leitfähige Füllmaterial eine Wärmeleitfähigkeit in einem Bereich von 100 W/m/K bis 1 000 W/m/K in der Ebene aufweist.

8. Raumfahrzeug (100) nach Anspruch 1, bei dem die Vielzahl von Nuten (700) zwischen 4 und 20 Nuten (700) umfasst.

9. Verfahren, umfassend:
das Bereitstellen einer Menge an Aluminiumblech;
das Tiefziehen einer ersten Platte aus dem Aluminiumblech, um eine erste tiefgezogene Platte zu bilden;
das Tiefziehen einer zweiten Platte aus dem Aluminiumblech, um eine zweite tiefgezogene Platte zu bilden;
das Ausbilden einer Vielzahl von Nuten (700) in mindestens einer der ersten tiefgezogenen Platte und der zweiten tiefgezogenen Platte;
das Anordnen mindestens eines Wärmeträgerelements (740) in mindestens einer der mehreren Rillen (700);
das Bereitstellen mindestens einer Bordgerätekomponente;
das Befestigen der mindestens einen Bordgerätekomponente an der ersten tiefgezogenen Platte,
wobei mindestens eines der Vielzahl an Bordgeräteelementen neben dem Wärmeträgerelement (740) angeordnet ist, wobei zumindest einige der Vielzahl an Bordgeräteelementen kein Gehäuse aufweisen, und
wobei das mindestens eine Wärmeträgerelement (740) so ausgelegt ist, dass es Wärme von der Vielzahl an Bordgeräten abführt;
das Verbinden der ersten Platte mit der zweiten Platte, um eine Außenhülle eines Raumfahrzeugs (100) zu bilden.

10. Verfahren nach Anspruch 9, bei dem das Verbinden der ersten Platte mit der zweiten Platte das Verschweißen mindestens eines Abschnitts eines Umfangs der ersten tiefgezogenen Platte mit mindestens einem Abschnitt eines Umfangs der zweiten tiefgezogenen Platte umfasst.

11. Verfahren nach Anspruch 9, bei dem das Verbinden der ersten Platte mit der zweiten Platte das Verschweißen des gesamten Umfangs der ersten tiefgezogenen Platte mit dem gesamten Umfang der zweiten tiefgezogenen Platte umfasst.

## Revendications

1. Véhicule spatial (100) comprenant :
un premier panneau en aluminium (110) ;
un deuxième panneau en aluminium (120) fixé au premier panneau en aluminium (110) sur au moins une portion de leurs périmètres respectifs afin de former ainsi une structure close présentant un volume intérieur ;
une pluralité de rainures (700) formées dans au moins l'un du premier panneau en aluminium (110) ou du deuxième panneau en aluminium (120),
dans lequel la pluralité de rainures (700) sont en regard d'un intérieur du véhicule spatial (100) ;
au moins un élément de transport de chaleur (740) positionné dans au moins l'une de la pluralité de rainures (700) ;
une charge de remplissage conductrice positionnée entre l'élément de transport de chaleur (740) et une surface intérieure de l'au moins une rainure parmi la pluralité de rainures (700) de manière à coller l'au moins un élément de transport de chaleur (740) à l'au moins une rainure parmi la pluralité de rainures (700) ; et
une pluralité d'éléments d'équipement embarqués positionnés au sein du volume intérieur du véhicule spatial (100),
dans lequel au moins un parmi la pluralité d'éléments d'équipement embarqués est positionné adjacent à l'élément de transport de chaleur (740),
dans lequel au moins certains de la pluralité d'éléments d'équipement embarqués sont dépourvus de boîtier,
dans lequel la charge de remplissage conductrice est configurée pour transporter de la chaleur depuis les éléments d'équipement embarqués vers l'au moins un élément de transport de chaleur (740), et
dans lequel l'au moins un élément de transport de chaleur (740) est configuré pour évacuer la chaleur de la pluralité d' éléments d'équipement embarqués.

2. Véhicule spatial (100) selon la revendication 1, dans lequel la pluralité de rainures (700) sont orientées parallèlement les unes aux autres.

3. Véhicule spatial (100) selon la revendication 1, dans lequel l'au moins un élément de transport de chaleur (740) comprend au moins l'un parmi un caloduc cuivre-eau, un matériau à base de nanotubes de carbone, un caloduc aluminium-ammoniaque ou un nanotube de carbone.

4. Véhicule spatial (100) selon la revendication 1, dans lequel l'élément de transport de chaleur (740) présente une densité de flux thermique comprise dans une plage allant de 2 W/m² à 20 W/m².

5. Véhicule spatial (100) selon la revendication 1, dans lequel l'élément de transport de chaleur (740) présente une conductivité thermique qui est d'au moins 1 000 W/m/K.

6. Véhicule spatial (100) selon la revendication 1, dans lequel l'élément de transport de chaleur (740) présente une capacité de transport de chaleur dans une plage allant de 10 W à 1 000 W.

7. Véhicule spatial (100) selon la revendication 1, dans lequel la charge de remplissage conductrice présente une conductivité thermique dans une plage allant de 100 W/m/K à 1 000 W/m/K dans le plan.

8. Véhicule spatial (100) selon la revendication 1, dans lequel la pluralité de rainures (700) comprend entre 4 et 20 rainures (700).

9. Procédé comprenant :
la fourniture d'une quantité de tôle d'aluminium ;
le formage par emboutissage d'un premier panneau à partir de la tôle d'aluminium pour former un premier panneau embouti ;
le formage par emboutissage d'un deuxième panneau à partir de la tôle d'aluminium pour former un deuxième panneau embouti ;
la formation d'une pluralité de rainures (700) dans au moins l'un parmi le premier panneau embouti et le deuxième panneau embouti ;
le positionnement d'au moins un élément de transport de chaleur (740) dans au moins l'une de la pluralité de rainures (700) ;
la fourniture d'au moins un composant d'équipement embarqué ;
la fixation dudit au moins un composant d'équipement embarqué au premier panneau embouti,
dans lequel au moins un de la pluralité d'éléments d'équipement embarqués est positionné adjacent à l'élément de transport de chaleur (740), dans lequel au moins certains de la pluralité d'éléments d'équipement embarqués sont dépourvus de boîtier, et
dans lequel l'au moins un élément de transport de chaleur (740) est configuré pour évacuer la chaleur de la pluralité d'éléments d'équipement embarqués ;
le scellement du premier panneau au deuxième panneau pour former une coque extérieure d'un véhicule spatial (100).

10. Procédé selon la revendication 9, dans lequel le scellement du premier panneau au deuxième panneau comprend le soudage d'au moins une portion d'un périmètre du premier panneau embouti à au moins une portion d'un périmètre du deuxième panneau embouti.

11. Procédé selon la revendication 9, dans lequel le scellement du premier panneau au deuxième panneau comprend le soudage de l'ensemble du périmètre du premier panneau embouti à l'ensemble du périmètre du deuxième panneau embouti.
